# EUROPÄISCHE PATENTANMELDUNG

(11) **EP 0 976 806 A1**
(43) Veröffentlichungstag der Anmeldung: **02.02.2000**
(21) Anmeldenummer: 99114067.4
(22) Anmeldetag: 20.07.1999
(51) Int. Cl.: C10B 31/06, C10J 3/30, C10B 53/00

(54) **Vorrichtung zur Durchführung von Hochtemperatur-Recycling von heterogen anfallenden Abfällen und Verfahren zu deren Beschickung**

(30) Priorität: 30.07.1998 DE 19834470
(71) Anmelder: THERMOSELECT AKTIENGESELLSCHAFT, FL-9490 Vaduz (LI)
(72) Erfinder: Kiss, Günter H., 6648 Minusio (CH)
(74) Vertreter: Pfenning, Meinig & Partner

(57) **Zusammenfassung**

Die Erfindung betrifft eine Vorrichtung und ein Verfahren zu deren Beschickung zur Durchführung von Hochtemperatur-Recycling für heterogen anfallende Abfälle, wobei die Verfahrensführung im wesentlichen nach dem bekannten Thermoselect-Verfahren erfolgt. Die erfindungsgemäße Vorrichtung ist dabei so ausgebildet, daß die heterogen anfallenden Abfälle in unsortierter Form ohne jegliche weitere Vorbehandlung zu Kompaktpaketen verpreßt werden und im Anschluß daran in einen beheizten Kanal zur Verdampfung von Flüssigkeiten und leicht flüssigen Stoffen eingeführt werden. Die erfindungsgemäße Vorrichtung zeichnet sich dadurch aus, daß am Eintritt des Kanals ein unbeheizter Abschnitt vorhanden ist, in den mindestens ein Kompaktpaket des verpreßten Abfalls eingeführt werden kann.

## Beschreibung

Die Erfindung betrifft eine Vorrichtung und ein Verfahren zu deren Beschickung zur Durchführung von Hochtemperatur-Recycling für heterogen anfallende Abfälle, wobei die Verfahrensführung im wesentlichen nach dem bekannten Thermoselect-Verfahren erfolgt.

Dabei ist es aus DE 41 30 416 C1 bekannt, heterogen anfallende Abfälle in unsortierter, unbehandelter Form thermisch so zu behandeln, daß sämtliche Inhaltsstoffe thermisch getrennt und ggf. einer Stoffumwandlung unterzogen werden, so daß ein Hochtemperatur-Recycling mit vollständiger Verwertung erreicht werden kann. Hierfür wird der heterogen angefallene Abfall zu Kompaktpaketen verpreßt und in einen von außen beheizten länglichen Kanal beschickt, wobei die Temperatur des beheizten Kanals oberhalb 100 °C liegen soll. Dabei soll ein kraftschlüssiger Kontakt mit den Kanalwandungen nur so lange eingehalten werden, bis die mitgeführten Flüssigkeiten und leichtflüchtigen Stoffe verdampft und vorhandene Rückstellkräfte einzelner Komponenten aufgehoben sind.

Es hat sich nunmehr gezeigt, daß es infolge des Wärmeeintrags in die Kompaktpakete über den von außen beheizten Kanal zu Stoffumwandlungen kommt, die zum einen das Volumen verringern können, und daß zum anderen die Rückstellkräfte des kompaktierten Abfalls wesentlich schneller aufgehoben werden als dies unter dem Gesichtspunkt der Gasdichtigkeit wünschenswert ist.

Eine ähnliche Lösung wird auch in DE 43 39 548 C1 beschrieben und dabei werden bei dem entsprechenden Verfahren die anfallenden Gase und Kondensationsprodukte über außerhalb des Kanals angeordnete zusätzliche Seitenkanäle in Richtung auf den Hochtemperatur-Reaktor abgeführt. Die Abfuhr erfolgt über entsprechend ausgebildete Öffnungen und an den Seitenkanälen sind zusätzliche umlaufende mechanische Räumeinrichtungen vorhanden.

Es ist Aufgabe der Erfindung die Gasdichte am Eintritt in einen Kanal, wie er bei einem Verfahren nach DE 41 30 416 C1 Verwendung finden soll, zu verbessern.

Erfindungsgemäß wird diese Aufgabe mit den Merkmalen des Patentanspruchs 1 für die Vorrichtung und den Merkmalen des Patentanspruchs 10 für ein entsprechendes Verfahren zu deren Beschickung gelöst.

Die erfindungsgemäße Vorrichtung ist dabei so ausgebildet, daß die heterogen anfallenden Abfälle in unsortierter Form ohne jegliche weitere Vorbehandlung zu Kompaktpaketen verpreßt werden und im Anschluß daran in einen beheizten Kanal zur Verdampfung von Flüssigkeiten und leicht flüssigen Stoffen eingeführt werden. An diesen Kanal schließt sich ein Hochtemperatur-Reaktor zur thermischen Behandlung und Verwertung der verschiedenen im Abfall enthaltenen Stoffkomponenten an. Die erfindungsgemäße Vorrichtung zeichnet sich dadurch aus, daß am Eintritt des Kanals ein unbeheizter Abschnitt vorhanden ist, in den mindestens ein Kompaktpaket des verpreßten Abfalls eingeführt werden kann.

Günstigerweise wird die erfindungsgemäße Vorrichtung so ausgebildet, daß in diesem unbeheizten Abschnitt Temperaturen unterhalb 100 °C eingehalten werden.

Hierzu kann der Kanal in diesem Abschnitt isoliert und/oder mit einer Kühlung an der Kanalwandlung ausgebildet werden.

Dabei ist es günstig, die Kompaktpakete so zu dimensionieren und zu verdichten, daß zumindest für die Öffnungszeit des eigentlichen Kanalverschlusses beim Einführen eines neuen Kompaktpaketes Gasdichte gewährleistet ist und diese ansonsten im Zusammenwirken mit dem Verschluß am Kanaleingang erreicht werden kann. Hierfür kann selbstverständlich auch mehr als nur ein Kompaktpaket im unbeheizten Abschnitt des Kanals aufgenommen sein. Kompaktpaket und unbeheizter Abschnitt können jedoch auch so dimensioniert sein, daß allein ein Teil eines Kompaktpaketes ausreicht, um den Kanal eintrittseitig zu verschließen und abzudichten. In diesen Temperaturbereichen finden nur geringfügig Vorgänge statt, die zu einer Veränderung der Kompaktpakete und der darin enthaltenen Stoffkomponenten führen. So tritt keine Volumenverringerung auf, da die Temperaturen im unbeheizten Abschnitt des Kanals keine Verringerung der Rückstellkräfte des zu Kompaktpaketen verpreßten Abfalls bewirken und die Rückstellkräfte die Kompaktpakete sogar gegen die Innenwand des Kanales drücken. Der Abfall ist und bleibt in den Kompaktpaketen daher ausreichend verdichtet, um zu verhindern, daß im weiteren Verlauf des Verfahrens gebildete Gase in Richtung aus dem Kanaleintritt austreten können, so daß der Austritt giftiger bzw. gefährlicher gasförmiger Stoffe dort vermieden werden kann und der gesamte Stoffinhalt des Abfalls einem Hochtemperatur-Recycling unterzogen werden kann.

Die Erfindung kann weitergebildet werden, in dem am am Hochtemperatur-Reaktor ein Mundstück ausgebildet ist, das thermisch, bevorzugt mit einer Feuerfest-Ausmauerung isoliert und/oder mit einer Kühlung ausgestattet ist, in das der Kanal ausläuft. Die Dimensionierung dieses Mundstückes sollte gemeinsam mit der Isolierung bzw. Kühlung sichern, daß zwischen Hochtemperatur-Reaktor und dem Ende des Kanals bzw. Mundstückes ein Temperaturgradient von mindestens 500 °C erreicht werden kann, um den eigentlichen Kanal vor der sehr hohen thermischen Belastung zu schützen.

Zu einer bevorzugten Ausführungsform ist vorgesehen, daß im Mundstück 7 mindestens ein Probeeinführungsstutzen vorgesehen ist.

Mit derartigen Probeeinführungsstutzen können direkt Suspensionen, Schlämme oder Gasmischungen nach ausreichender Vorverschichtung zur schadstoffarmen Verwertung von angefallenen Zwischenprodukten oder zur stofflichen Umwandlung von externen nicht verwendbaren Produkten von z.B. Filterstäube, kontaminierte Absorbentien (z.B. Aktivkohle) oder Pulvermischungen dem Reaktor zugeführt werden. Bevorzugt sind zwei bis vier Probeeinführungsstutzen im Mundstück angeordnet.

Günstigerweise sollte der Austritt des Kanals bzw. das Mundstück in den Hochtemperatur-Reaktor, durch den die bereits thermisch vorbehandelten Kompaktpakete in den Hochtemperatur-Reaktor gepreßt werden, maximal bis zur Mitte der Reaktorhöhe oder unterhalb der Mittellinie des Hochtemperatur-Reaktors angeordnet sein. Das hat den Vorteil, daß der Kanalaustritt in einem Bereich des Hochtemperatur-Reaktors angeordnet ist, in dem nicht die maximalen Temperaturen auftreten.

Nachfolgend soll die Erfindung anhand eines Beispiels näher beschrieben werden.

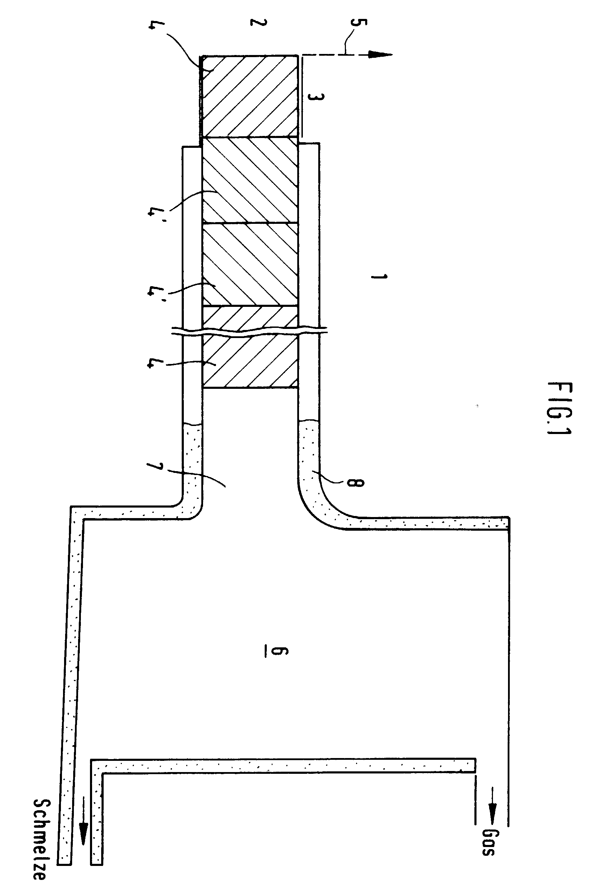

Dabei zeigt die einzige Figur schematisch den Aufbau einer erfindungsgemäßen Vorrichtung.

In der Figur ist dargestellt, wie ein verdichtetes, verpreßtes Kompaktpaket 4 durch den Kanaleintritt 2 des Kanals 1, der für die Beschickung, wie das durch die gestrichelte Darstellung mit Pfeil deutlich hervorgehoben wird, durch den geöffneten Verschluß 5 in einen ersten unbeheizten Abschnitt 3 des Kanals 1 eingeführt wird.

Zur Verdeutlichung des Prinzips sind weitere Kompaktpakete 4' dargestellt, die unter Einwirkung der Einpreßkraft des Kompaktpaketes 4 im Kanal 1 weitergefördert werden. Dabei ist der beheizte Abschnitt des Kanals 1 nur teilweise in seiner gesamten Länge dargestellt.

Dabei erfolgen erste Stoffumwandlungen in dem sich an den ersten unbeheizten Abschnitt 3 des Kanals 1 anschließenden Abschnitt durch beispielsweise Verdampfungs- und Entgasungsprozesse. Die gebildeten Dämpfe und Kondensate können nur in Richtung auf den Hoch" temperatur-Reaktor 6 aus dem Kanal 1 entweichen und dort thermisch umgewandelt bzw. in nachfolgenden Verfahrensschritten, die sich an die Hochtemperatur-Behandlung im Hochtemperatur-Reaktor 6 anschließen, umgewandelt und einer weiteren Verwertung zugeführt werden. Ein Austritt dieser Kondensate bzw. Gase wird durch das sich im ersten unbeheizten Abschnitt 3 des Kanals 1 befindliche Kompaktpaket 4 mit Sicherheit verhindert, da dieses so verpreßt ist, daß es für Gase bzw. Kondensate undurchlässig ist und auch so lange bleibt, bis das Kompaktpaket 4 durch ein erneut in den Kanaleintritt 2 eingeführtes Kompaktpaket aus dem unbeheizten Abschnitt 3 des Kanals 1 in Richtung auf den Hochtemperatur-Reaktor 6 gefördert wird.

Dabei wird das Kompaktpaket 4 vor der Einführung durch den Kanaleintritt 2 mit einer nicht dargestellten Presse so kompaktiert und der Abfall so miteinander verpreßt, daß die äußeren Abmaße des Kompaktpakets 4 mit dem Querschnitt des Kanals 1 nahezu übereinstimmen und die Rückstellkräfte des kompaktierten Abfalls im ersten unbeheizten Abschnitt 3 des Kanals 1 gegen die Innenwandung des Kanals 1 wirken.

Am Hochtemperatur-Reaktor 6 ist ein Mundstück 7 ausgebildet, in das der Kanal 1 ausläuft und durch das die thermisch vorbehandelten Kompaktpakete 4, die gebildeten Gase und Kondensate in den Hochtemperatur-Reaktor 6 gelangen.

Das Mundstück 7 ist bevorzugt mit einer Isolierung 8 aus einem feuerfesten Material versehen, das dem in diesem Bereich des Hochttemperatur-Reaktors 6 entspricht, um den Einfluß der hohen Temperaturen im Hochtemperatur-Reaktor 6 einzuschränken.

Beim Hochtemperatur-Reaktor 6 ist schematisch der Austritt von bei der Hochtemperatur-Behandlung gebildeten Gasen, die selbstverständlich, wie auch der Austritt für die schmelzflüssigen Stoffe dargestellt, die einer Weiterverwertung zugeführt werden.

## Patentansprüche

1. Vorrichtung zur Durchführung von Hochtemperatur-Recycling für heterogen anfallende Abfälle mit einem beheizten Kanal durch den der zu Kompaktpaketen verpreßte Abfall, zur Verdampfung von Flüssigkeiten und leichtflüssigen Stoffen, in einen im Anschluß daran angeordneten Hochtemperaturreaktor zur themischen Behandlung und Verwertung geführt wird,
dadurch **gekennzeichnet,** daß der Kanal (1) an seinem Eintritt (2) einen unbeheizten Abschnitt (3) aufweist, in den mindestens ein Kompaktpaket (4) einführbar ist.

2. Vorrichtung nach Anspruch 1,
dadurch gekennzeichnet, daß im unbeheizten Abschnitt (3) Temperaturen unterhalb 100 ° C eingehalten sind.

3. Vorrichtung nach Anspruch 1 oder 2,
dadurch gekennzeichnet, daß der Kanal (1) im unbeheizten Abschnitt (3) isoliert und/oder dort eine Kühlung an der Kanalwandung angeordnet ist.

4. Vorrichtung nach einem der Ansprüche 1 bis 3,
dadurch gekennzeichnet, daß das/die Kompaktpaket(e) (4) so dimensioniert und verdichtet sind, daß deren Rückstellkräfte im unbeheizten Bereich (3) Gasdichtheit gewährleisten.

5. Vorrichtung nach einem der Ansprüche 1 bis 4,
dadurch gekennzeichnet, daß der Kanal (1) in ein am Hochtemperaturreaktor (6) ausgebildetes Mundstück (7) ausläuft.

6. Vorrichtung nach einem der Ansprüche 1 bis 5,
dadurch gekennzeichnet, daß das Mundstück (7) thermisch isoliert und/oder mit einer Kühlung ausgestattet ist.

7. Vorrichtung nach einem der Ansprüche 1 bis 6,
dadurch gekennzeichnet, daß die thermische Isolierung (8) eine feuerfest-Ausmauerung ist, die der feuerfest-Ausmauerung in diesem Bereich des Hochtemperaturreaktors (6) entspricht.

8. Vorrichtung nach einem der Ansprüche 1 bis 7,
dadurch gekennzeichnet, daß das Mundstück (7) am Hochtemperaturreaktor (6) maximal bis zur Mitte der Reaktorhöhe oder darunter angeordnet ist.

9. Vorrichtung nach mindestens einem der Ansprüche 1 bis 8, dadurch gekennzeichnet, daß im Mundstück (7) mindestens ein Probeeinführungsstutzen vorgesehen ist.

10. Verfahren zur Beschickung einer Vorrichtung nach einem der Ansprüche 1 bis 9,
dadurch gekennzeichnet, daß die Kompaktpakete (4) so verpreßt werden, daß sie im unbeheizten Abschnitt (3) unter Druck unter Ausnutzung der innewohnenden Rückstellkräfte an der Kanalwandung anliegen.

11. Verfahren nach Anspruch 10, dadurch gekennzeichnet, daß die Temperatur der Kompaktpakete (4) im unbeheizten Bereich (3) so eingestellt wird, daß dort keine Stoffumwandlung erfolgt, die zu einer Verringerung des Volumens des/der Kompaktpakete(s) (4) führt, bis eine neues Kompaktpaket (4) in den Kanal (1) eingeführt wird.
